# EUROPÄISCHE PATENTANMELDUNG

(11) **EP 1 482 719 A1**
(43) Veröffentlichungstag der Anmeldung: **01.12.2004**
(21) Anmeldenummer: 03011382.3
(22) Anmeldetag: 19.05.2003
(51) Int. Cl.: H04M 11/02

(54) **Türstation einer Hauskommunikationsanlage sowie Funktionseinheit einer solchen Türstation**

(71) Anmelder: Bitron Video S.r.l., 10044 Pianezza (TO) (IT)
(72) Erfinder: Bersano, Marco, 10044 Pianezza (TO) (IT)
(74) Vertreter: Patentanwälte Leinweber & Zimmermann

(57) **Zusammenfassung**

Die Erfindung betrifft eine Türstation einer Hauskommunikationsanlage.

Erfindungsgemäß ist eine Signalisiereinrichtung vorgesehen, die auf einen vorbestimmten Betriebszustand anspricht.

## Beschreibung

Die Erfindung betrifft eine Türstation einer Hauskommunikationsanlage. Dabei wird unter einer Hauskommunikationsanlage eine solche Anlage verstanden, die zur Übertragung von Kommunikationssignalen, insbesondere zwischen der Türstation und einer Wohnungsstation dient. Solche Signale können Sprach- und/oder Bildsignale sein. Es können aber auch Signale von Sensoren oder Befehlssignale sein.

Herkömmliche Türstationen werden üblicherweise nur zum Erzeugen von Signalen bzw. zum Auslösen von Signalen verwendet. Ein Beispiel ist das Rufsignal, das durch Betätigen beispielsweise einer Klingeltaste an der Türstation ausgelöst wird und einen Nutzer der Wohnungsstation darauf hinweist, daß ein Besucher an der Türstation steht.

Erfindungsgemäß ist an der Türstation eine Signalisiereinrichtung vorgesehen, die auf einen vorbestimmten Betriebszustand anspricht.

Bei dem vorbestimmten Betriebszustand kann es sich erfindungsgemäß bevorzugt um folgendes handeln:
- Ein Rufsignal ist in einer Wohnungsstation der Hauskommunikationsanlage ausgelöst worden. Mit anderen Worten wird bei dieser Ausgestaltung dem Besucher an der Tür angezeigt, daß das Betätigen der Klingeltaste tatsächlich zum Auslösen eines Rufes in der gewünschten Wohnungsstation geführt hat.
- Ein an der Türstation ausgelöster Ruf ist an der Wohnungsstation angenommen worden. Mit anderen Worten wird bei dieser Ausgestaltung der Erfindung dem Besucher an der Türstation beispielsweise angezeigt, daß ein Nutzer der Hauskommunikationsanlage die gerufene Wohnungsstation insofern in Betrieb genommen hat, als jetzt eine Übertragung von Sprach- und/oder Bildsignalen stattfindet. Diese Ausgestaltung kann beispielsweise sinnvoll sein für sprechbehinderte Nutzer, weil der Besucher in diesem Fall die Sprachkommunikation auch dann aufnehmen wird, wenn er kein "ja bitte" oder dergleichen hört.
- Es ist eine Fehlfunktion in der Hauskommunikationsanlage aufgetreten. Bei dieser Ausgestaltung wird einem Besucher unter Umständen gleich signalisiert, daß die Hauskommunikationsanlage einen Defekt hat, so daß es unter Umständen zwecklos ist, eine Rufeinrichtung zu betätigen. Bei mehreren Rufeinrichtungen an der Türstation und mehreren Signalisiereinrichtungen, die jeweils einer Rufeinrichtung zugeordnet sind, kann darüber hinaus das Ansteuern der Signalisiereinrichtung einem Monteur einen Hinweis darauf geben, gegebenenfalls welche Wohnungsstation einen Defekt aufweist.

Die Signalisiereinrichtung weist erfindungsgemäß bevorzugt eine Leuchte, insbesondere eine LED auf. Diese Ausgestaltung ist aus Lärmschutzgründen beispielsweise einer akustischen Signalisierung vorzuziehen.

Wie bereits oben erwähnt, kann die Signalisiereinrichtung erfindungsgemäß bevorzugt einer Funktionseinheit der Türstation zugeordnet sein, die mindestens eine Einrichtung zum Auslösen eines Rufes in einer Wohnungsstation der Hauskommunikationsanlage aufweist. Bei dieser Ausgestaltung ist es ohne weiteres möglich, die Signalisierung einer bestimmten Wohnungsstation zuzuordnen, was insbesondere dann vorteilhaft ist, wenn die Signalisierung eine Fehlfunktion betrifft oder signalisieren soll, daß ein Ruf in einer bestimmten Wohnungsstation ausgelöst oder angenommen worden ist.

Die Erfindung betrifft ferner eine Türstation einer Hauskommunikationsanlage, mit mindestens einer Einrichtung zum Auslösen eines Rufes in einer Wohnungsstation der Hauskommunikationsanlage und einem Informationsträger. Dabei kann die Türstation zusätzlich oder alternativ auch die oben beschriebenen Merkmale aufweisen.

Erfindungsgemäß ist vorgesehen, daß der Informationsträger gegen Manipulation verriegelt ist und die Verriegelung derart mit der Rufauslöseeinrichtung gekoppelt ist, daß ein Betätigen der Rufauslöseeinrichtung die Verriegelung löst.

Bei dem Informationsträger kann es sich beispielsweise um ein Namensschild handeln. Dieses Namensschild ist erfindungsgemäß nur dann austauschbar oder veränderbar, wenn die Rufauslöseeinrichtung betätigt wird. Dadurch wird eine Sicherheit gegen unerwünschte Manipulation bzw. gegen Entwenden von Namensschildern erreicht. Will man nämlich den Informationsträger, der beispielsweise die Form eines Namensschildes hat, manipulieren, so muß man die Rufauslöseeinrichtung betätigen. In einem solchen Fall werden die Nutzer der Hauskommunikationsanlage unmittelbar auf den Versuch der Manipulation aufmerksam gemacht und können die Manipulation verhindern, sofern sie unerwünscht sein sollte.

Nach einer besonders bevorzugten Ausführungsform der Erfindung ist dabei vorgesehen, daß der Informationsträger derart gehalten ist, daß ein Entriegeln durch Verschieben entlang einer Bahn quer zur Normalen auf seine Vorderseite erfolgt, und die Rufauslöseeinrichtung mit einer Nase gekoppelt ist, die im Ruhezustand der Rufauslöseeinrichtung in die Verschiebebahn des Informationsträgers hineinragt und im Betätigungszustand außerhalb der Bahn liegt.

Auf diese Weise ist eine besonders einfache Ausgestaltung geschaffen.

Schließlich schafft die Erfindung eine Funktionseinheit einer Türstation einer Hauskommunikationsanlage, die die oben beschriebene Signalisiereinrichtung, die oben beschriebene Rufauslöseeinrichtung und/oder den oben beschriebenen Informationsträger aufweist.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische Schnittansicht einer Türstation nach einem bevorzugten Ausführungsbeispiel der Erfindung und
- Figur 2: eine schematische perspektivische Ansicht der Funktionseinheit nach Figur 1.

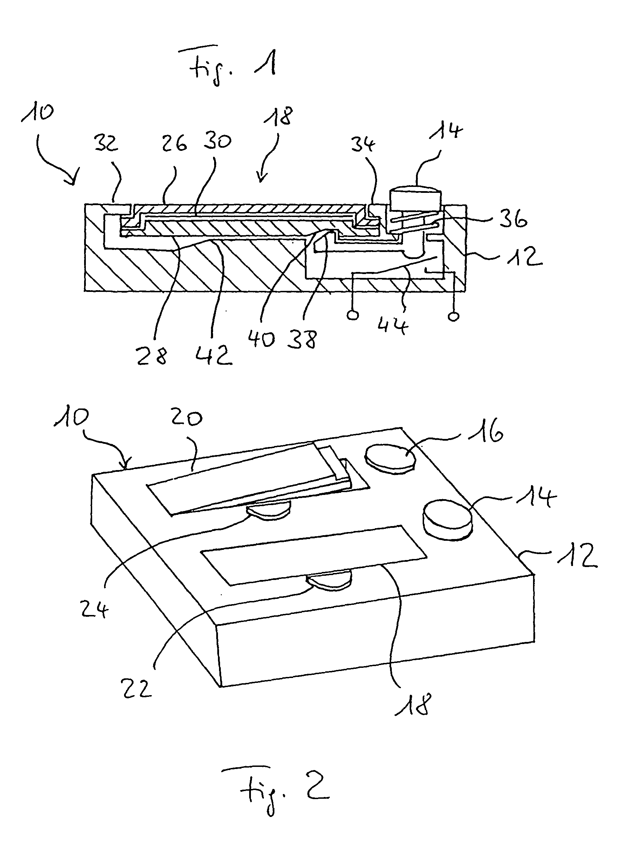

Eine in den Figuren 1 und 2 mit der Bezugszahl 10 bezeichnete Funktionseinheit weist ein Gehäuse 12, zwei Ruftasten 14 und 16, zwei Namensschildhalter 18 und 20 und zwei Sichtfenster 22 und 24 auf, durch die jeweils eine nicht in der Zeichnung dargestellte LED sichtbar ist.

Bei dem in der Zeichnung dargestellten Ausführungsbeispiel leuchtet die LED 22 beispielsweise dann auf, wenn in einer der Ruftaste 14 und dem Namensschildhalter 18 zugeordneten Wohnungsstation eine Fehlfunktion aufgetreten ist. Dadurch bekommt ein Monteur gleich wertvolle Hinweise für die Behebung des Fehlers.

Der Namensschildhalter 18 setzt sich aus einem Außenelement 26 und einem Innenelement 28 zusammen, zwischen denen ein Namensschild 30 gehalten ist.

In dem in Figur 1 gezeigten montierten Zustand übergreift das Gehäuse 12 mit zwei Nasen 32 und 34 Außenränder des Außenelements 26. Die mittels einer Feder 36 vorgespannte Ruftaste 14 weist eine Nase 38 auf, die in dem in Figur 1 dargestellten Zustand in eine Ausnehmung 40 eingreift. An dem Gehäuse 12 ist hinter einem Teil des Innenelements 28 eine Wippe 42 ausgebildet. Ein Betätigen der Ruftaste 14 durch Hinabdrücken gegen die Kraft der Feder 36 führt zu einem Schließen eines Kontaktes 44 und dadurch zum Auslösen eines Rufsignals in der gerufenen Wohnungsstation.

Zum Ausbauen des Namensschildhalters 18 wird die Ruftaste 14 hinabgedrückt, wodurch die Nase 38 aus der Ausnehmung 40 herausgefahren wird. In diesem Zustand wird auf die in Figur 1 links gelegene Seite des Außenelements 26 und damit des Namensschildhalters 18 gedrückt, wodurch sich der Namensschildhalter 18 verformt. Die in Figur 1 links gelegene Seite des Namensschildhalters 18 wird sich nämlich nach unten senken. Sobald die hinabgedrückte linke Seite des Namensschildhalters 18 unter die Nase 32 abgesenkt worden ist, kann der Namensschildhalter 18 in Figur 1 nach links verschoben werden, wodurch die Nase 34 den Namensschildhalter 18 freigibt. In dieser Stellung kann er entnommen werden. Eine solche Stellung entspricht derjenigen Stellung, in der der Namensschildhalter 20 in Figur 2 gezeigt ist.

Wie die obigen Ausführungen zeigen, ist ein Entfernen der Namensschildhalter 18 und 20 nur möglich, indem die Ruftasten 14 bzw. 16 betätigt werden. Eine unerwünschte Manipulation wird daher einem Bewohner der zugehörigen Wohnungsstation angezeigt.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Türstation einer Hauskommunikationsanlage,
**gekennzeichnet durch**
eine Signalisiereinrichtung (22, 24), die auf einen vorbestimmten Betriebszustand anspricht.

2. Türstation nach Anspruch 1, **dadurch gekennzeichnet, daß** der vorbestimmte Betriebszustand
- das Auslösen eines Rufes in einer Wohnungsstation der Hauskommunikationsanlage ist,
- das Annehmen eines Rufes in einer gerufenen Wohnungsstation der Hauskommunikationsanlage ist und/oder
- eine Fehlfunktion in der Hauskommunikationsanlage ist.

3. Türstation nach Anspruch 1 oder 2, **dadurch gekennzeichnet, daß** die Signalisiereinrichtung (22, 24) eine Leuchte, insbesondere eine LED aufweist.

4. Türstation nach einem der vorangehenden Ansprüche, **dadurch gekennzeichnet, daß** die Signalisiereinrichtung (22, 24) einer Funktionseinheit (10) der Türstation zugeordnet ist, die mindestens eine Einrichtung (14, 16) zum Auslösen eines Rufes in einer Wohnungsstation der Hauskommunikationsanlage aufweist.

5. Türstation nach einem der vorangehenden Ansprüche, **dadurch gekennzeichnet, daß** die Signalisiereinrichtung (22, 24) einer von mehreren Rufauslöseeinrichtungen (14, 16) zugeordnet ist.

6. Türstation einer Hauskommunikationsanlage, mit mindestens einer Einrichtung (14) zum Auslösen eines Rufes in einer Wohnungsstation der Hauskommunikationsanlage und einem Informationsträger (18), insbesondere nach einem der vorangehenden Ansprüche,
**dadurch gekennzeichnet, daß**
der Informationsträger (18) gegen Manipulation verriegelt ist und die Verriegelung derart mit der Rufauslöseeinrichtung (14) gekoppelt ist, daß ein Betätigen der Rufauslöseeinrichtung (14) die Verriegelung löst.

7. Türstation nach Anspruch 6, **dadurch gekennzeichnet, daß** der Informationsträger (18) derart gehalten ist, daß ein Entriegeln durch Verschieben entlang einer Bahn quer zur Normalen auf seine Vorderseite erfolgt, und die Rufauslöseeinrichtung (14) mit einer Nase (38) gekoppelt ist, die im Ruhezustand der Rufauslöseeinrichtung (14) in die Verschiebebahn des Informationsträgers (18) hineinragt und im Betätigungszustand außerhalb der Bahn liegt.

8. Funktionseinheit einer Türstation einer Hauskommunikationsanlage nach einem der vorangehenden Ansprüche,
**dadurch gekennzeichnet, daß**
sie die Signalisiereinrichtung (22, 24), die Rufauslöseeinrichtung (14) und/oder den Informationsträger (18) aufweist.
